# FASCICULE DE BREVET EUROPEEN

(11) **EP 2 838 692 B1**
(45) Date de publication et mention de la délivrance du brevet: **03.07.2019**
(21) Numéro de dépôt: 13720474.9
(22) Date de dépôt: 11.04.2013
(51) Int. Cl.: B23P 15/04, F01D 5/14, F01D 5/28, F04D 29/02, F04D 29/32, B23K 20/02, B21D 53/78

(54) **PROCÉDÉ DE RÉALISATION D'UN RENFORT MÉTALLIQUE POUR LA PROTECTION D'UN BORD D'ATTAQUE OU D'UN BORD DE FUITE D'UNE AUBE EN MATÉRIAU COMPOSITE ET RENFORT MÉTALLIQUE CORRESPONDANT**
VERFAHREN ZUR ERZEUGUNG EINES METALLISCHEN VERSTÄRKUNGSSTÜCKS ZUM SCHÜTZEN EINER VORDERKANTE ODER EINER HINTERKANTE EINER KOMPOSITSCHAUFEL UND ENTSPRECHENDES METALLISCHES VERSTÄRKUNGSSTÜCK
METHOD FOR CREATING A METAL REINFORCEMENT PIECE FOR PROTECTING A LEADING EDGE OR A TRAILING EDGE OF A COMPOSITE BLADE AND RESPECTIVE METAL REINFORMENT PIECE

(30) Priorité: 19.04.2012 FR 1253595
(43) Date de publication de la demande: 25.02.2015
(73) Titulaire: Safran Aircraft Engines, 75015 Paris (FR)
(72) Inventeur: FRANCHET, Jean-Michel, F-77550 Moissy-Cramayel cedex (FR); KLEIN, Gilles, F-77550 Moissy-Cramayel cedex (FR); LECONTE, Gilbert, F-77550 Moissy-Cramayel cedex (FR); MAGNAUDEIX, Dominique, F-77550 Moissy-Cramayel cedex (FR)
(74) Mandataire: Gevers & Orès
(86) Numéro de dépôt international: PCT/FR2013/050785
(87) Numéro de publication internationale: WO 2013/156711

(56) Documents cités:
- EP-A1- 1 574 270
- EP-A1- 1 643 011
- EP-A1- 2 281 645
- FR-A1- 2 956 602
- FR-A1- 2 957 545
- US-A- 4 738 594

## Description

Le domaine de la présente invention est celui de la fabrication de pièces métalliques et plus particulièrement celui de la fabrication de bords d'attaque ou de bords de fuite en titane pour l'aéronautique, comme par exemple des bords d'attaque pour des aubes de soufflante de turbomachines, à large corde, qui sont réalisées en matériau composite. En particulier, la présente demande concerne un procédé de réalisation d'un renfort métallique pour la protection d'un bord d'attaque ou de fuite d'une aube d'une machine aéronautique réalisée en matériau composite, par matriçage de tôles et soudage entre elles par diffusion. Elle concerne de plus, un renfort métallique pour la protection d'un bord d'attaque ou de fuite d'une aube en matériau composite d'une machine aéronautique. Un tel procédé et un tel renfort sont décrits dans le document FR 2957545.

Les aubes de fan des turboréacteurs sont maintenant, pour des raisons de poids et de coûts, réalisées majoritairement en matériau composite. Ces pièces qui sont soumises à d'importantes contraintes mécaniques, dues à leur vitesse de rotation et à la charge aérodynamique qu'elles supportent, doivent en outre résister aux éventuels impacts de particules ou de corps étrangers qui pénètreraient dans la veine d'air. Pour cela elles sont protégées au niveau de leur bord d'attaque et/ou de leur bord de fuite, par une pièce métallique qui recouvre leurs extrémités et qui est collée sur le matériau composite de la pale.

La gamme, couramment mise en oeuvre, de fabrication des bords d'attaque en titane pour des aubes fan en composite est lourde et complexe à mettre en oeuvre, ce qui implique des coûts importants. Elle est en effet principalement basée sur des opérations de formage à chaud, ce qui nécessite des outillages qui résistent aux températures pratiquées. Elle nécessite en outre la réalisation d'usinages importants tant au stade des pièces intermédiaires qu'au stade final de la réalisation.

Par ailleurs il convient de répondre au problème de la résistance à l'érosion du bord d'attaque ainsi réalisé. Diverses solutions ont été imaginées pour cela, comme celle qui consiste à former une structure en deux couches métalliques collées l'une sur l'autre. Une première couche est alors réalisée en un alliage à base titane qui permet d'accommoder la déformation du bord d'attaque lors d'un impact et une deuxième couche est réalisée en un alliage à base nickel pour le protéger contre l'érosion. Cette solution n'est envisageable que dans le cas de formes simples pour le renfort de bord d'attaque, pour lesquelles la pièce peut être obtenue par un simple pliage de tôles minces. Pour des renforts de forme complexe, la gamme de fabrication d'un renfort en alliage à base nickel sera très compliquée à mettre au point et la pièce coûteuse à produire.

Enfin, pour des raisons de poids et de tenue mécanique, ces bords d'attaque ou de fuite, qui sont généralement réalisés en titane, sont d'une épaisseur relativement faible. Compte tenu de cette faible épaisseur, l'emploi d'un procédé de fabrication comprenant l'assemblage de tôles par un procédé de formage superplastique et soudage par diffusion (SPFDB pour Super Plastic Forming and Diffusion Bonding), a naturellement été proposé. Un tel procédé est décrit dans la demande de brevet EP 1574270 de la demanderesse.

Ce procédé ne permet cependant de maîtriser que difficilement, la forme intérieure de la cavité et en particulier il limite les possibilités pour un raccordement optimal des tôles au niveau de l'extrémité de la cavité. Pour remédier à cela la demanderesse a imaginé un procédé de fabrication de bords d'attaque ou de bords de fuite en titane, qui utilise un noyau sur lequel des tôles en titane sont soudées entre elles et appliquées autour du noyau par une compression isostatique à chaud. Ce procédé a fait l'objet de la demande de brevet publiée sous le numéro FR 2957545.

S'il facilite grandement la réalisation des bords d'attaque, ce procédé, dans sa forme actuelle, ne prend pas en compte pas le besoin, évoqué précédemment, d'un renforcement du bord d'attaque pour améliorer la résistance de la pièce en titane au phénomène d'érosion qui est rencontré en utilisation.

La présente invention a pour but de remédier à ces inconvénients en proposant un procédé simple et peu coûteux pour la réalisation d'un renfort en titane de bord d'attaque, ou de bord de fuite, pour une aube de turbomachine, qui présente une meilleure résistance à l'érosion.

A cet effet, l'invention a pour objet un procédé de réalisation d'un renfort métallique pour la protection d'un bord d'attaque ou de fuite d'une aube d'une machine aéronautique réalisée en matériau composite, par matriçage de tôles et soudage entre elles par diffusion, comprenant les caractéristiques de la revendication 1.

On obtient ainsi un renfort muni d'une pointe durcie, qui est réalisé de façon économique, puisque cette opération d'adjonction d'un insert se fait sans opération supplémentaire, par comparaison avec les précédés de l'art antérieur.

De façon préférentielle la limite d'élasticité à froid de l'alliage de l'insert est supérieure à celle du matériau du renfort.

Dans un premier mode de réalisation les tôles sont en alliage de titane et dans lequel l'insert est réalisé en un alliage de titane choisi dans une gamme du type Ti5553, Ti10-2-3 ou Ti17.

Dans un second mode de réalisation les tôles sont en alliage de titane et dans lequel l'insert est réalisé en un alliage intermétallique de titane.

Avantageusement l'alliage intermétallique est un alliage titane-aluminium.

Dans un troisième mode de réalisation les tôles sont en alliage de titane et dans lequel l'insert est réalisé en un alliage orthorhombique.

Avantageusement l'alliage orthorhombique est un alliage titane-aluminium-niobium.

L'invention porte aussi sur un renfort métallique pour la protection d'un bord d'attaque ou de fuite d'une aube d'une machine aéronautique réalisée en matériau composite, comprenant les caractéristiques de la revendication 8.

Avantageusement le matériau du renfort est un premier alliage de titane et le matériau de l'insert est un second alliage de titane, de dureté et de limite d'élasticité à froid plus élevées que celles dudit renfort.

Préférentiellement l'alliage en titane du renfort est du TA6V et l'alliage de l'insert est choisi parmi les alliages Ti5553, Ti10-2-3, Ti17, TiAl ou Ti2AlNb.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'une étape de formage des tôles, au cours de la réalisation d'un renfort de bord d'attaque par un procédé selon l'art antérieur ;
- la figure 2 est une vue schématique d'une étape de pré-assemblage des tôles au cours de la réalisation d'un renfort de bord d'attaque par un procédé selon l'art antérieur ;
- la figure 3 est une vue schématique d'une étape d'assemblage des tôles au cours de la réalisation d'un renfort de bord d'attaque par un procédé selon l'art antérieur ;
- la figure 4 est une vue schématique de l'étape de pré-assemblage des tôles par un procédé selon un mode de réalisation de l'invention ;
- la figure 5 est une vue schématique en coupe d'un renfort de bord d'attaque après l'étape de compression HIP selon le procédé de l'invention, et
- la figure 6 est une vue en coupe d'un renfort de bord d'attaque selon l'invention, après un usinage final.

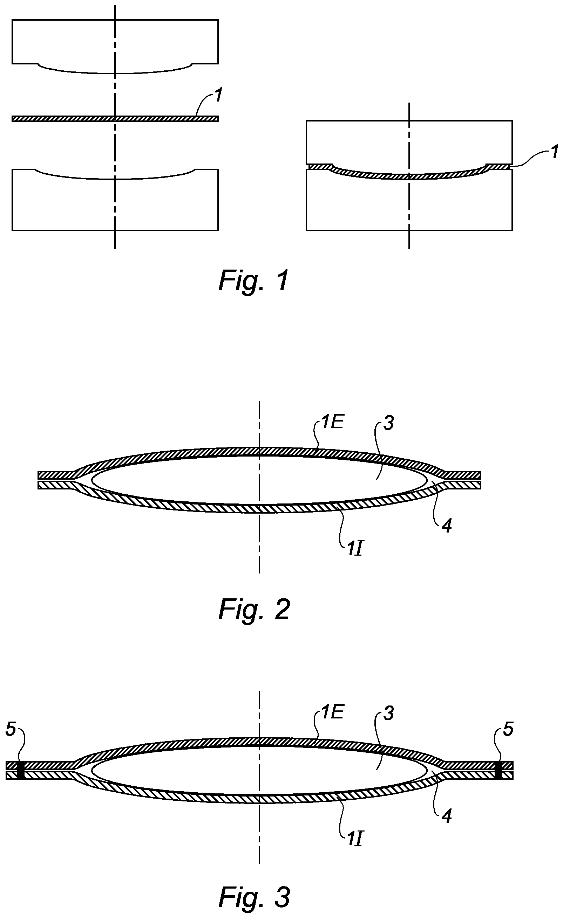

En se référant à la figure 1, on voit, en deux étapes, une opération de formage à chaud d'une tôle 1 en titane afin de lui donner, sur une de ses faces, une forme qui corresponde approximativement à la forme externe d'un noyau réfractaire, ledit noyau ayant la forme précise à donner à la cavité interne du bord d'attaque. Deux tôles sont ainsi formées successivement, dont l'une a vocation à devenir l'extrados 1E du bord d'attaque et l'autre son intrados 1I.

Telles que représentées, les figures 1 à 3 montrent la réalisation simultanée de deux renforts de bord d'attaque, en utilisant une propriété de symétrie de ces pièces.

La figure 2 montre un noyau 3, en matériau réfractaire (ou en un alliage métallique, tel que de l'IN100, qui présente un coefficient de dilatation très différent de celui du titane du bord d'attaque), le noyau étant entouré par deux tôles 1E et 1I préformées, comme indiqué précédemment, pour s'adapter au noyau sur une grande partie de leur longueur. On remarque que les deux tôles ne sont pas conformées pour se rejoindre, après assemblage, en se faisant face selon un angle plat au niveau de la pointe du bord d'attaque, mais qu'elles se terminent par des parties qui sont sensiblement parallèles et alignées selon le plan médian du noyau. En conséquence les deux tôles n'enveloppent pas précisément le noyau sur lequel elles vont être assemblées au niveau de la pointe du bord d'attaque. Un espace résiduel 4 est laissé qui sera résorbé au cours des étapes ultérieures.

Dans cette configuration les tôles sont assemblées par pointage (non visible sur la figure) et soudage TIG (soudage à l'arc avec une électrode non fusible en tungstène, sous atmosphère inerte), afin de les lier l'une à l'autre et les maintenir en place sur le noyau 3.

La figure 3 montre, selon l'art antérieur, le résultat d'une étape d'assemblage des deux tôles 1E et 1I, autour du noyau réfractaire, au moyen d'un soudage par faisceau d'électron (FE). Celui-ci est effectué le long d'un cordon 5, parallèlement aux bords latéraux des tôles, comme on le voit sur la figure 3, mais aussi aux extrémités transversales de la pièce (non visibles sur la figure).

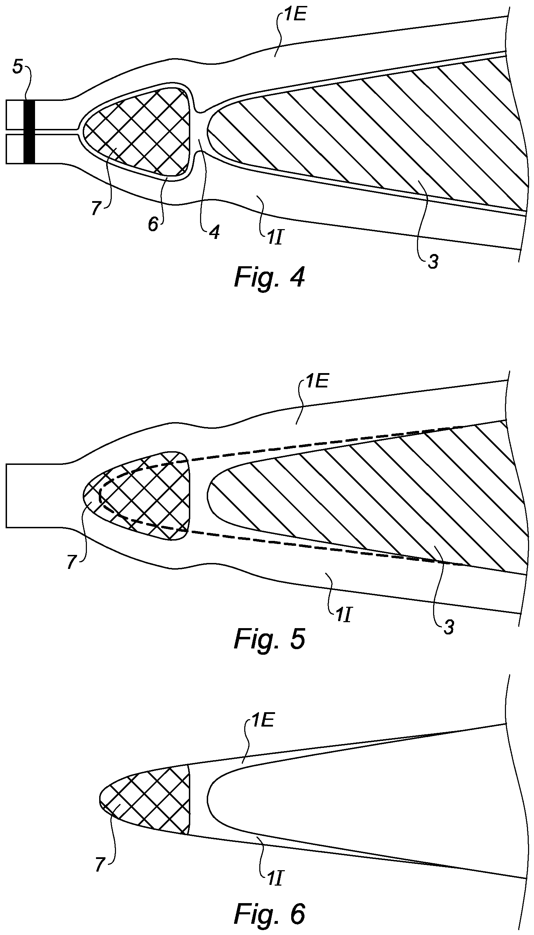

La figure 4 montre l'étape d'assemblage des deux tôles 1E et 1I dans le cas d'un procédé selon l'invention. Lors de l'étape de formage des tôles une déformation de chacune d'elle a été réalisée de façon à créer une cavité 6 entre elles au moment du pré-assemblage. Cette cavité est ménagée entre le cordon de soudure 5 et la pointe avant du noyau 3, au-delà de l'espace résiduel 4, dans une position plus amont que le noyau 3. Une position plus amont signifie une position plus avancée dans la direction du bord d'attaque. Cette cavité a été remplie avant le pré-assemblage par un insert 7, réalisé en un alliage plus résistant à l'érosion que le métal des tôles.

L'étape suivante, d'assemblage des tôles par un procédé de compression isostatique à chaud (ou HIP pour high isostatic pressure), est analogue à celle pratiquée lors de l'art antérieur. Le procédé HIP génère une déformation des tôles 1E et 1I qui viennent se plaquer contre le noyau 3 et contre l'insert 7, dont elles épousent parfaitement les formes.

Sur la figure 5 on voit l'état du renfort de bord d'attaque, après cette opération. L'espace résiduel 4 a été supprimé et l'insert 7 est englobé dans la partie avant du renfort. Le trait pointillé représente la forme souhaitée pour le renfort de bord d'attaque, qui s'inscrit parfaitement dans le volume obtenu à l'issue de cette opération d'assemblage.

La figure 6 montre le renfort de bord d'attaque obtenu à la fin du procédé de réalisation selon l'invention. La pièce obtenue a été découpée le long de la ligne pointillée de la figure précédente, laissant apparaître le métal de l'insert 7, et le noyau 3 a été retiré, par des techniques connues de l'homme du métier. Le renfort de bord d'attaque est alors prêt à être monté sur une pale en matériau composite, par exemple par collage, pour donner à celle-ci la résistance nécessaire pour une durée de vie importante en utilisation.

On va maintenant décrire le déroulement de la fabrication d'un renfort de bord d'attaque par un procédé selon un mode de réalisation de l'invention.

Le principe du procédé consiste, comme dans l'art antérieur, à souder diffusion et conformer autour d'un noyau, deux tôles de titane intrados et extrados. L'opération débute par une opération classique de matriçage qui amène les tôles dans une forme proche de celle souhaitée pour le renfort de bord d'attaque. Pour cela un noyau ayant la forme de la cavité interne du renfort métallique a été précédemment réalisé, une de ses faces reproduisant la forme interne de l'extrados du bord d'attaque et l'autre face reproduisant la forme interne de l'intrados du bord d'attaque.

Selon l'invention, en premier lieu, un insert 7 est réalisé en un matériau résistant à l'érosion, et son profil est défini pour déborder du volume que l'on souhaite obtenir pour lui donner en extrémité du bord d'attaque. Il peut être obtenu par usinage mais aussi plus avantageusement par filage ou forgeage afin de minimiser les opérations d'usinage. En second lieu, lors du matriçage, une déformation spécifique est ménagée sur chaque tôle 1 de façon à créer une cavité 6 entre les deux tôles 1E et 1I lors de leur pré-assemblage. Le volume de cette cavité 6 correspond à celui de l'insert 7 et son positionnement répond à la position recherchée en bout de bord d'attaque pour y placer le matériau résistant à l'érosion.

La suite du procédé est analogue à celle de l'art antérieur, avec un pré-assemblage des tôles autour du noyau 3 et de l'insert 7 par une opération de pointage et de soudage TIG, le long des bords latéraux des tôles. L'ensemble est ensuite placé dans une enceinte de mise sous vide pour la réalisation d'un soudage par faisceau d'électrons. Un cordon de soudure ininterrompu est réalisé à la fois le long des bords latéraux des tôles mais aussi sur leur bords transversaux, ce qui permet d'entourer complètement le noyau 3 et l'insert 7 et de refermer l'ensemble. Le vide est ainsi maintenu entre les tôles 1 et le noyau 3, et en particulier dans l'espace résiduel 4 laissé entre les tôles 1E, 1I, la pointe du noyau 3 et l'insert 7.

L'ensemble constitué par le noyau 3, l'insert 7 et les deux tôles 1E et 1I subit ensuite une opération de compression isostatique à chaud, conduite à une température d'environ 940°C, dans le cas considéré d'une aube en alliage de titane TA6V. A cette température le métal est relativement mou et peut fluer sous l'action de la pression, d'environ 1000 bars, qui lui est appliquée. Les deux tôles se déforment pour venir épouser parfaitement la forme du noyau 3 et celle de l'insert 7, en supprimant l'espace résiduel 4. Parallèlement, sous l'effet de la chaleur et de la pression, les deux tôles se soudent entre elles par diffusion et se soudent par diffusion avec l'insert.

La fin du procédé comporte une étape d'enlèvement de la matière excédentaire le long des bords latéraux du renfort de bord d'attaque, par une découpe selon la ligne représentée en pointillés sur la figure 5 et un usinage final qui permet de donner la forme extérieure recherchée au bord d'attaque. Cet usinage final fait apparaître le métal de l'insert 7, qui est ainsi placé à l'extrémité du renfort de bord d'attaque, là où les problèmes d'érosion sont les plus critiques.

Le concept de l'invention repose sur le principe de renforcer localement la pointe du bord d'attaque des aubes fan composites par l'intermédiaire d'un alliage plus résistant à l'érosion que l'alliage de titane de base (en général du TA6V) utilisé pour le renfort.

Le choix du matériau résistant à l'érosion doit être tel que ce matériau puisse se souder par diffusion avec les tôles intrados et extrados lors de l'étape de conformage par compaction isostatique à chaud (HIP). Il doit donc être compatible chimiquement avec l'alliage de titane des tôles intrados et extrados et notamment ne pas conduire à des contaminations mutuelles des deux alliages. Il doit également avoir une fenêtre en température pour le soudage diffusion proche de celui de l'alliage de titane des tôles afin de permettre le soudage diffusion entre les deux alliages. L'alliage de l'insert 7 est ainsi choisi en base titane pour des raisons de compatibilité avec l'alliage des tôles intrados et extrados. Cet alliage doit avoir des caractéristiques élevées de dureté et de limite d'élasticité à basse température, et pour cela, il est choisi préférentiellement dans la gamme des alliages du type Ti5553, Ti10-2-3 ou Ti17. Il peut également être un alliage intermétallique du type TiAl ou un alliage orthorhombique du type Ti2AlNb.

L'invention a été décrite en prenant pour exemple une aube de soufflante et son bord d'attaque. Il est bien évident qu'elle peut tout aussi bien être mise en oeuvre sur toute aube d'une turbomachine, que celle-ci soit une aube d'un étage quelconque d'un compresseur ou bien une aube de turbine.

## Revendications

1. Procédé de réalisation d'un renfort métallique pour la protection d'un bord d'attaque, ou d'un bord de fuite, d'une aube d'une machine aéronautique réalisée en matériau composite, par matriçage de tôles (1) et soudage entre elles par diffusion, **caractérisé en ce qu'**il comporte les étapes de :
- réalisation d'un noyau (3) ayant la forme de la cavité interne du renfort métallique à réaliser, le noyau comprenant une première face correspondant à la forme interne de l'extrados du renfort et une deuxième face correspondant à la forme interne de l'intrados du renfort,
- réalisation d'un insert (7) en un alliage à base de titane de dureté supérieure à celui du renfort,
- mise en forme initiale des tôles par matriçage pour rapprocher les tôles de la forme de l'extrados (1E) et de l'intrados (1I) dudit renfort, les tôles se déformant en formant une cavité (6) pour recevoir l'insert (7) entre ladite cavité interne pour arrangement du noyau (3) et le bord dudit renfort, un espace résiduel (4) étant formé entre la cavité (6) et ladite cavité interne,
- positionnement desdites tôles autour dudit noyau (3) avec mise en place de l'insert (7) dans ladite cavité (6) et solidarisation de l'ensemble,
- mise sous vide et fermeture de l'ensemble par soudage,
- assemblage de l'ensemble par compression isostatique à chaud, de manière à diffuser-souder l'insert et les tôles entre elles,
- réalisation du profil externe du renfort par un usinage final faisant apparaître le matériau de l'insert (7),
- découpe de l'ensemble pour extraction du noyau (3) et séparation du renfort.

2. Procédé selon la revendication 1 dans lequel la limite d'élasticité à froid de l'alliage de l'insert (7) est supérieure à celle du matériau du renfort (3).

3. Procédé selon l'une des revendications 1 ou 2 dans lequel les tôles sont en alliage de titane et dans lequel l'insert (7) est réalisé en un alliage de titane choisi dans une gamme du type Ti5553, Ti10-2-3 ou Ti17.

4. Procédé selon l'une des revendications 1 ou 2 dans lequel les tôles sont en alliage de titane et dans lequel l'insert (7) est réalisé en un alliage intermétallique de titane.

5. Procédé selon la revendication 4 dans lequel l'alliage intermétallique est un alliage titane-aluminium.

6. Procédé selon l'une des revendications 1 ou 2 dans lequel les tôles sont en alliage de titane et dans lequel l'insert (7) est réalisé en un alliage orthorhombique.

7. Procédé selon la revendication 6 dans lequel l'alliage orthorhombique est un alliage titane-aluminium-niobium.

8. Renfort métallique pour la protection d'un bord d'attaque ou de fuite d'une aube en matériau composite d'une machine aéronautique, réalisé par le procédé selon l'une quelconque des revendications 1 à 7, le renfort métallique comportant un insert (7) apparaissant dans la partie avant du renfort, réalisé en un alliage de titane dont la dureté est supérieure à celui du reste de renfort et fixé audit reste de renfort par soudage-diffusion.

9. Renfort selon la revendication 8 dans lequel le matériau du renfort est un premier alliage de titane et le matériau de l'insert est un second alliage de titane, de dureté et de limite d'élasticité à froid plus élevées que celles dudit renfort.

10. Renfort selon la revendication 9 dans lequel l'alliage en titane du renfort est du TA6V et l'alliage de l'insert (7) est choisi parmi les alliages Ti5553, Ti10-2-3, Ti17, TiAl ou Ti2AlNb.

## Patentansprüche

1. Verfahren zur Ausführung einer metallischen Verstärkung zum Schützen einer Angriffskante, oder einer Abströmkante, einer aus Kompositmaterial ausgeführten Schaufel einer Luftfahrtmaschine, durch Gesenkschmieden von Blechen (1) und Diffusionsverschweißen miteinander, **dadurch gekennzeichnet, dass** es die folgenden Schritte beinhaltet:
- Ausführung eines Kerns (3), der die Form des inneren Hohlraums der auszuführenden metallischen Verstärkung aufweist, wobei der Kern eine erste Fläche, die der inneren Form der äußeren Wölbfläche der Verstärkung entspricht, und zweite Fläche umfasst, die der inneren Form der inneren Wölbfläche der Verstärkung entspricht,
- Ausführung eines Einsatzes (7) aus einer Legierung auf Titanbasis mit einer Härte, die höher ist als die der Verstärkung,
- anfängliches Ausgestalten der Bleche durch Gesenkschmieden, um die Bleche der Form der äußeren Wölbfläche (1E) und der inneren Wölbfläche (1I) der Verstärkung anzunähern, wobei sich die Bleche beim Formen eines Hohlraums (6) verformen, um den Einsatz (7) zwischen dem inneren Hohlraum zum Anordnen des Kerns (3) und der Kante der Verstärkung aufzunehmen, wobei ein Restraum (4) zwischen dem Hohlraum (6) und dem inneren Hohlraum geformt wird,
- Positionieren der Bleche um den Kern (3) herum mit Anbringen des Einsatzes (7) im Hohlraum (6) und Festverbindung der Einheit,
- Platzieren der Einheit unter Vakuum und Schließen der Einheit durch Schweißen,
- Montage der Einheit durch heißisostatisches Pressen, so dass der Einsatz und die Bleche miteinander diffusionsverschweißt werden,
- Ausführung des äußeren Profils der Verstärkung durch eine Endbearbeitung, die das Material des Einsatzes (7) erscheinen lässt,
- Zuschneiden der Einheit zum Extrahieren des Kerns (3) und Abtrennen der Verstärkung.

2. Verfahren nach Anspruch 1, wobei die Kaltelastizitätsgrenze der Legierung des Einsatzes (7) höher ist als die des Materials der Verstärkung (3).

3. Verfahren nach einem der Ansprüche 1 oder 2, wobei die Bleche aus Titanlegierung bestehen und wobei der Einsatz (7) aus einer Titanlegierung ausgeführt ist, ausgewählt aus einer Serie des Typs Ti5553, Ti10-2-3 oder Ti17.

4. Verfahren nach einem der Ansprüche 1 oder 2, wobei die Bleche aus Titanlegierung bestehen und wobei der Einsatz (7) aus einer intermetallischen Titanlegierung ausgeführt ist.

5. Verfahren nach Anspruch 4, wobei die intermetallische Legierung eine Titan-Aluminiumlegierung ist.

6. Verfahren nach einem der Ansprüche 1 oder 2, wobei die Bleche aus Titanlegierung bestehen und wobei der Einsatz (7) aus einer orthorhombischen Legierung ausgeführt ist.

7. Verfahren nach Anspruch 6, wobei die orthorhombische Legierung eine Titan-Aluminium-Niob-Legierung ist.

8. Metallische Verstärkung zum Schützen einer Angriffs- oder Abströmkante einer Kompositschaufel einer Luftfahrtmaschine, die durch das Verfahren nach einem der Ansprüche 1 bis 7 ausgeführt wird, wobei die metallische Verstärkung einen Einsatz (7) beinhaltet, der im vorderen Teil der Verstärkung gebildet ist, der aus einer Titanlegierung ausgeführt ist, dessen Härte höher ist als die des Rests des Verstärkung und der am Rest der Verstärkung durch Diffusionsverschweißen fixiert ist.

9. Verstärkung nach Anspruch 8, wobei das Verstärkungsmaterial eine erste Titanlegierung ist und das Material des Einsatzes eine zweite Titanlegierung ist, mit einer Härte und einer Kaltelastizitätsgrenze, die höher sind, als die der Verstärkung.

10. Verstärkung nach Anspruch 9, wobei die Titanlegierung der Verstärkung TA6V ist und die Legierung des Einsatzes (7) ausgewählt ist aus den Legierungen Ti5553, Ti10-2-3, Ti17, TiAl oder Ti2AlNb.

## Claims

1. Method for producing a metal reinforcement for protecting a leading edge, or a trailing edge, of an aeronautical engine blade made of composite material, by stamping metal sheets (1) and diffusion-welding them to one another, **characterised in that** it includes the steps of:
- producing a core (3) that has the shape of the internal cavity of the metal reinforcement to be produced, the core comprising a first face reproducing the internal shape of the suction face of the reinforcement and a second face reproducing the internal shape of the pressure face of the reinforcement;
- producing an insert (7) made of a titanium alloy of a hardness greater than that of the reinforcement;
- initial shaping of the metal sheets by stamping in order to bring them closer to the shape of the suction face (1E) and pressure face (1I) of said reinforcement, the metal sheets being deformed by forming a cavity (6) to receive the insert (7) between said inner cavity for the arrangement of the core (3) and the edge of said reinforcement, a residual space (4) being formed between the cavity (6) and said inner cavity,
- positioning said metal sheets around said core (3) with the insert (7) being placed in said cavity (6) and the assembly being joined together;
- placing the assembly under vacuum and closing said assembly by welding;
- joining the assembly by hot isostatic pressing, so as to diffusion-weld the insert and the metal sheets together;
- producing the external profile of the reinforcement by a final machining operation that reveals the material of the insert (7);
- cutting the assembly to extract the core (3) and separate the reinforcement.

2. Method according to claim 1, wherein the elastic limit for cold working of the alloy used for the insert (7) is greater than that of the material used for the reinforcement (3).

3. Method according to either claim 1 or claim 2, wherein the metal sheets are made of titanium alloy and wherein the insert (7) is made of a titanium alloy selected from a range comprising Ti5553, Ti10-2-3 or Ti17.

4. Method according to either claim 1 or claim 2, wherein the metal sheets are made of titanium alloy and wherein the insert (7) is made of an intermetallic titanium alloy.

5. Method according to claim 4, wherein the intermetallic alloy is a titanium-aluminium alloy.

6. Method according to claim 1 or claim 2, wherein the metal sheets are made of titanium alloy and wherein the insert (7) is made of an orthorhombic alloy.

7. Method according to claim 6, wherein the orthorhombic alloy is a titanium-aluminium-niobium alloy.

8. Metal reinforcement for protecting a leading edge or a trailing edge of an aeronautical engine blade made of composite material, produced by the method according to any of claims 1 to 7, the metal reinforcement having an insert (7) appearing in the front part of the reinforcement, made of a titanium alloy of a hardness greater than that of the reinforcement and fixed to said reinforcement by diffusion welding.

9. Reinforcement according to claim 8, wherein the material of the reinforcement is a first titanium alloy and the material of the insert is a second titanium alloy, of which the hardness and elastic limit for cold working are greater than those of said reinforcement.

10. Reinforcement according to claim 9, wherein the titanium alloy of the reinforcement is TA6V and the alloy of the insert (7) is selected from the alloys Ti5553, Ti10-2-3, Ti17, TiAl or Ti2AlNb.
